(19) Europäisches Patentamt
European Patent Office
Office européen des brevets

(11) EP 0 702 418 B1

(12) **FASCICULE DE BREVET EUROPEEN**

(45) Date de publication et mention
de la délivrance du brevet:
**09.12.1998 Bulletin 1998/50**

(51) Int Cl.$^6$: **H01L 41/04**, H01L 41/09,
H02N 2/14

(21) Numéro de dépôt: **95402104.4**

(22) Date de dépôt: **19.09.1995**

(54) **Transducteur à onde mécanique progessive**

Mechanischer Wanderwellenantrieb

Progressive mechanical wave transducer

(84) Etats contractants désignés:
**DE ES FR GB IT**

(30) Priorité: **19.09.1994 FR 9411126**

(43) Date de publication de la demande:
**20.03.1996 Bulletin 1996/12**

(73) Titulaire: **MAGNETI MARELLI FRANCE**
**92000 Nanterre (FR)**

(72) Inventeurs:
• **Bezard, Jean-Jacques**
**F-78400 Chatou (FR)**
• **Trigui, Fathi**
**F-750011 Paris (FR)**

(74) Mandataire: **Texier, Christian**
**Cabinet Regimbeau,**
**26, Avenue Kléber**
**75116 Paris (FR)**

(56) Documents cités:
EP-A- 0 294 102          EP-A- 0 403 298
EP-A- 0 424 139          WO-A-91/08594
FR-A- 2 685 955

• PATENT ABSTRACTS OF JAPAN vol. 017 no.
424 (E-1410),6 Août 1993 & JP-A-05 083962 (NEC
CORP) 2 Avril 1993,

## Description

La présente invention concerne le domaine des transducteurs à onde mécanique progressive, en particulier, mais non exclusivement, des transducteurs à onde progressive ultrasonore.

La présente invention vise notamment le domaine technique des véhicules automobiles.

Dans le cadre de la présente invention, le terme "transducteur" recouvre à la fois, d'une part tout actionneur ou moteur apte à transformer un signal électrique d'entrée en un déplacement mécanique de sortie, et d'autre part tout capteur apte à transformer un déplacement mécanique d'entrée en un signal électrique de sortie.

Par ailleurs, dans le cadre de la présente invention, on entend par "actionneur" tout dispositif apte à déplacer un organe utile, par exemple une aiguille indicatrice, un système d'essuie-glace, un dispositif de positionnement de phares, etc...

La présente invention s'applique ainsi notamment à la conception d'un actionneur comprenant un moteur générant une vibration ultrasonore de type elliptique.

Par la suite, on s'attachera essentiellement à la description de moteurs conformes à la présente invention, sans que ce descriptif puisse être considéré comme limitatif, dans la mesure où comme évoqué précédemment, l'invention concerne également des structures de capteur.

La présente invention trouve en particulier, mais non exclusivement, application dans la réalisation d'un actionneur apte à déplacer une aiguille indicatrice en regard d'un cadran, dans un tableau de bord de véhicule automobile pour mettre à disposition du conducteur différents paramètres relatifs au véhicule, par exemple la vitesse de celui-ci, la température du moteur, le niveau d'huile, etc ...

Dans le cadre de la présente invention, le transducteur exploitant une vibration mécanique, de préférence ultrasonore, de type elliptique, est formé de préférence d'un moteur piézo-électrique ou d'un moteur magnétostrictif.

On a déjà proposé différents moteurs piézo-électriques.

Ceux-ci peuvent être formés par exemple d'une cellule motrice générant une vibration ultrasonore de type elliptique par combinaison d'une composante verticale et d'une composante transverse sur une pièce motrice. Plus précisément, une telle cellule de base peut être composée de deux céramiques piézo-électriques superposées sur un support et adaptées pour travailler respectivement en vibration transversale, c'est à dire au cisaillement, et en vibration longitudinale, c'est à dire en contraction/extension.

Lorsque ces deux céramiques sont excitées à la même fréquence, vers la résonance, mais avec un déphasage, de préférence de plus ou moins $\pi/2$, l'extrémité libre du moteur ainsi formée, opposée au support, décrit un mouvement elliptique. Ce mouvement elliptique peut être exploité pour déplacer une pièce reposant sur ce moteur piézo-électrique avec une force contrôlée.

En pratique, les moteurs piézo-électriques peuvent prendre diverses configurations, par exemple un simple barreau formé d'un empilement de deux céramiques piézo-électriques, ou encore une rondelle formée par juxtaposition d'un grand nombre de céramiques piézo-électriques.

Dans le cas d'une rondelle, celle-ci est excitée sous un mode de vibration à onde progressive et prend la forme d'une rondelle ondulée. La rotation se fait par roulement et frottement.

Un moteur piézo-électrique à onde mécanique progressive susceptible d'être utilisé dans le cadre de la présente invention est décrit par exemple dans le document JEE Janvier 1988, pages 42 à 44 : "A New Concept In motors Ultrasonic Wave Oscillation Drive Energy".

Les moteurs magnétostrictifs sont directement équivalents aux moteurs piézo-électriques. Les moteurs magnétostrictifs comprennent des matériaux excités par un champ magnétique, tandis que les moteurs piézo-électriques comprennent des matériaux excités par un champ électrique.

On a déjà proposé d'utiliser ces moteurs piézo-électriques pour piloter des actionneurs. Ces moteurs piézo-électriques présentent en particulier l'intérêt de générer un couple important.

Toutefois, les moteurs piézo-électriques présentent un grave inconvénient : ils ne présentent aucun repère de position, et même s'il n'existe pas de glissement entre la pièce entraînée et le moteur piézo-électrique, électrique, la vitesse étant proportionnelle à l'amplitude de la vibration, un recalage périodique de la pièce entraînée est indispensable.

Pour tenter de résoudre cette difficulté, on a déjà envisagé d'associer les moteurs piézo-électriques à un capteur de position formé par exemple d'une sonde à effet Hall et d'une cible ou encore d'un capteur potentiométrique ou d'un capteur optique. Ces solutions ne donnent cependant pas satisfaction. Elles sont coûteuses, encombrantes et peu fiables.

Le déposant a proposé dans le document FR-A-2685955, un actionneur comprenant un moteur à vibration ultrasonore de type elliptique et une pièce entraînée en contact avec le moteur dans lequel il est prévu en outre une cellule détectrice piézo-sensible en contact avec la pièce entraînée, apte à délivrer un signal représentatif des vibrations reçues et des moyens aptes à mesurer le décalage temporel entre le signal d'excitation appliqué au moteur et le signal délivré par la cellule détectrice résultant de la propagation dans la pièce entraînée, des vibrations engendrées par le moteur.

Le document JP-A-05083962 décrit une structure de moteur piézo-électrique comprenant un capteur de position angulaire qui opère par comparaison de phase entre un signal d'excitation et un signal détecté sur le rotor.

La présente invention a maintenant pour but de proposer un nouveau système de capteur de position de transducteur à onde mécanique progressive, qui soit simple et qui permette de connaître avec précision la position relative de l'élément mobile du transducteur par rapport à l'élément fixe de celui-ci.

Ce but est atteint selon la présente invention grâce à un transducteur comprenant un élément fixe et un élément mobile par rapport à l'élément fixe, l'élément fixe étant adapté pour générer une onde mécanique progressive présentant une longueur d'onde au moins égale à l'amplitude de déplacement mécanique relatif autorisé entre l'élément fixe et l'élément mobile, l'élément mobile étant en contact avec l'élément fixe et comportant au moins un capteur localisé, sensible à l'onde progressive générée par l'élément fixe, et dans lequel il est prévu des moyens de mesure du déphasage entre un signal lié au signal d'excitation appliqué à l'élément fixe pour générer l'onde progressive et un signal détecté sur le capteur.

Selon un mode de réalisation particulier et non limitatif, l'élément fixe est adapté pour générer une onde mécanique progressive présentant une longueur d'onde unique.

Cependant selon d'autres variantes, l'élément fixe est adapté pour générer une onde mécanique progressive présentant plusieurs longueurs d'onde sur l'étendue de l'élément fixe, sous réserve que des moyens soient prévus pour limiter l'amplitude de déplacement mécanique relatif entre l'élément fixe et l'élément mobile à une amplitude au plus égale à une longueur d'onde.

D'autres caractéristiques, buts et avantages de la présente invention apparaîtront à la lecture de la description détaillée qui va suivre, et en regard des dessins annexés donnés à titre d'exemples non limitatifs et sur lesquels:

- la figure 1 représente une vue schématique en coupe axiale d'un moteur piézo-électrique conforme à un premier mode de réalisation de la présente invention,
- la figure 2 représente le schéma fonctionnel du circuit de commande de ce moteur,
- la figure 3 représente une vue schématique en coupe axiale d'un moteur piézo-électrique conforme à une seconde variante de réalisation de la présente invention,
- la figure 4 représente le schéma du circuit de commande de ce moteur conforme à ce second mode de réalisation,
- la figure 5 représente schématiquement une vue partielle en coupe axiale d'un moteur conforme à la présente invention, et illustre plus précisément des moyens de sollicitation de l'élément mobile vers l'élément fixe,
- la figure 6 représente une vue axiale d'une variante de réalisation d'un moteur conforme à la présente invention,
- les figures 7 et 8 représentent deux vues similaires à la figure 6 illustrant des variantes de réalisation d'un rotor respectivement à branche unique et à deux branches,
- les figures 9, 10 et 11 représentent des vues en coupe transversale d'une branche du rotor selon un plan de coupe référencé IX-IX sur la figure 6, et illustrent diverses variantes d'appui de l'élément mobile sur l'élément fixe,
- la figure 12 représente une vue schématique d'une architecture de connexion de céramiques piézo-électriques dans le cadre de la présente invention et
- la figure 13 représente une variante de réalisation des moyens de commande conformes à la présente invention.

On va décrire par la suite des modes de réalisation préférentiels de la présente invention comprenant un moteur rotatif susceptible de déplacement relatif sur 360° entre l'élément fixe et l'élément mobile, et muni de moyens d'activation à fréquence ultrasonore, sans que ces dispositions puissent être considérées comme limitatives.

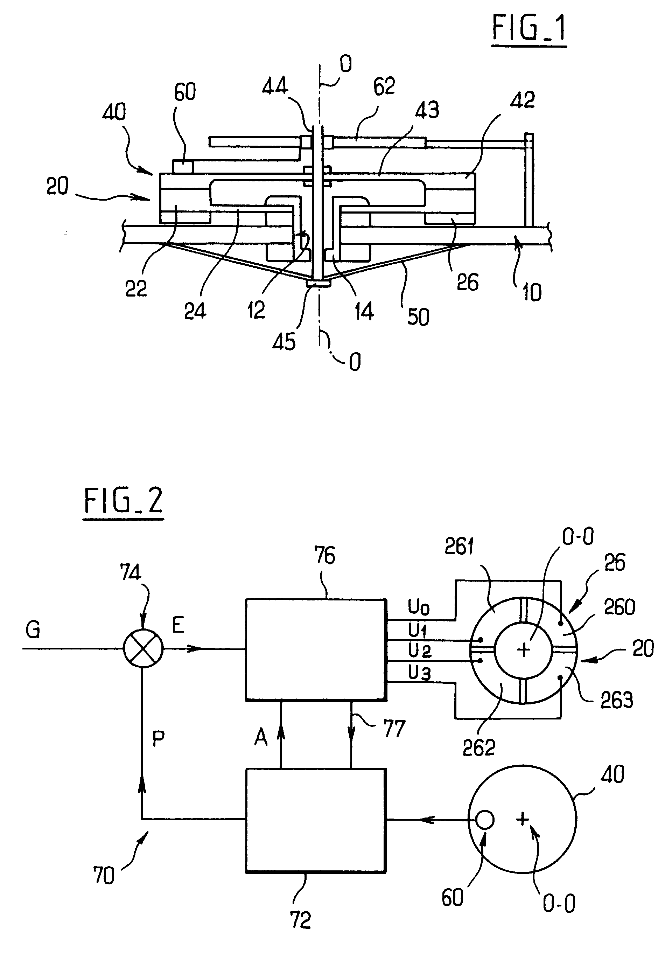

Le moteur piézo-électrique conforme à la présente invention repésenté sur la figure 1 annexée, comprend essentiellement un bâti 10, un élément fixe ou stator 20 lié au bâti 10 et un élément mobile ou rotor 40.

Le bâti 10 peut être formé par exemple d'un circuit imprimé plan. Le circuit imprimé 10 est muni d'un alésage traversant 12 dans lequel est placé un moyeu 14 centré sur un axe O-O.

Le stator 20 comprend principalement une bague 22 coaxiale à l'axe O-O et reliée au moyeu 14 par l'intermédiaire d'un flasque 24. En outre, une rondelle 26 également coaxiale à l'axe O-O, composée d'éléments moteurs, de préférence piézo-électriques, est intercalée entre la bague 22 et le circuit imprimé 10. Les éléments moteurs de la rondelle 26 sont alimentés à partir du circuit imprimé 10 par tout moyen approprié, par exemple par l'intermédiaire d'un système de connexion connu sous la dénomination ZEBRA formé d'un empilement régulier de couches en élastomère alternativement électriquement conducteur et non conducteur.

Le rotor 40 comprend une couronne ou une rondelle 42, coaxiale à l'axe O-O, qui repose sur la surface supérieure de la bague 22 de stator, soit la face du stator opposée à la rondelle 26.

Cette rondelle 42 de rotor est reliée rigidement à un arbre 44 centré sur l'axe O-O par l'intermédiaire d'un flasque 43. L'arbre 44 est concentrique aux éléments du stator 20 et du rotor 40 et guidé à rotation par le moyeu 14.

De préférence, un élément élastique 50 sollicite, sous un effort contrôlé, le rotor 40 vers le stator 20. Selon le mode de réalisation schématique et non limitatif donné sur la figure 1, cet élément élastique 50 est intercalé entre le circuit imprimé 10 formant le bâti du moteur et une tête évasée 45 liée à l'arbre 44.

La structure du moteur décrite précédemment en regard de la figure 1 est une structure classique assimilable à un moteur de type à onde mécanique progressive du genre décrit dans le document JEE précité. Lorsqu'elles sont alimentées de manière adéquate par le circuit imprimé 10, les cellules piézo-motrices de la rondelle 26 génèrent dans la bague 22 du stator une onde progressive ultrasonore qui entraîne un déplacement à rotation contrôlé résultant, du rotor 42.

Cependant, alors que dans les moteurs classiques la structure de la rondelle motrice piézo-électrique 26 et l'architecture de commande correspondante sont adaptées pour générer plusieurs longueurs d'ondes de l'onde progressive ultrasonore dans la bague de stator 22, soit sur l'amplitude de déplacement relatif autorisé entre le stator 22 et le rotor 40, selon l'invention le stator et l'architecture de commande associée sont adaptés pour générer une onde mécanique progressive présentant une longueur d'onde au moins égale à l'amplitude de déplacement mécanique relatif autorisé entre l'élément fixe et l'élément mobile, soit par exemple une seule longueur d'onde de l'onde progressive ultrasonore dans le stator 20, lorsque celui-ci est susceptible de rotation sur 360°.

En outre, le rotor 40 reçoit un capteur 60, formé de préférence d'un élément piézo-électrique ou d'une pluralité d'éléments piézo-électriques pour améliorer la précision, sensible à l'onde progressive générée dans le stator 22 et se propageant dans le rotor 40 grâce aux zones de contact mécanique établies entre stator et rotor. Le capteur 60 est avantageusement placé sur le rotor 40 à la verticale de la bague 22 du stator.

On peut envisager par exemple de relier l'une des bornes du capteur 60 au rotor 40, lui-même relié électriquement à l'arbre 44, tandis que la seconde borne du capteur 60 est isolée et reliée à un circuit de traitement, par exemple par l'intermédiaire d'un ressort spiral, comme on l'a schématisé sur la figure 1 sous la référence 62. Ce ressort spiral assurant la connexion sur le capteur 60 peut lui-même être relié à une piste électriquement conductrice associée prévue sur le circuit imprimé 10 précité.

En outre, le moteur conforme à l'invention comprend des moyens de mesure du déphasage entre le signal détecté sur le capteur 60 et un signal lié au signal d'excitation appliqué aux cellules motrices 26 de l'élément fixe pour générer l'onde progressive.

Le signal lié au signal d'excitation peut être formé du signal d'excitation lui-même. Cependant, on décrira par la suite d'autres variantes dans lesquelles le signal lié au signal d'excitation et utilisé pour la mesure du déphasage est différent du signal d'excitation.

La surface supérieure du stator 20 est le siège d'une onde mécanique de type elliptique qui comprend une composante tangentielle et une composante normale. La composante tangentielle assure le déplacement du rotor 40. Le capteur 60 détecte principalement la propagation de la composante normale dans le rotor 60.

L'homme de l'art comprendra que le déphasage ainsi détecté est directement représentatif de l'orientation angulaire relative entre le rotor 40 et le stator 20.

Selon une autre caractéristique avantageuse de l'invention, les moyens de commande sont adaptés pour opérer un balayage en fréquence du signal d'excitation appliqué aux éléments moteurs 26, pour mesurer l'amplitude du signal détecté sur le capteur 60 et fixer la fréquence de commande des moyens moteurs 26 à la fréquence correspondant au moins sensiblement à l'amplitude maximum du signal détecté en sortie du capteur 60.

La fréquence de commande ainsi obtenue correspond en effet sensiblement à la fréquence de résonance du moteur, optimale pour obtenir un déplacement satisfaisant du rotor 40.

En pratique, cette fréquence est de préférence dans le domaine ultrasonore, c'est-à-dire supérieure aux fréquences audibles. Elle est avantageusement de l'ordre de quelques dizaines de kHz, par exemple de l'ordre de 40kHz.

En pratique, on peut subdiviser la céramique piézo-motrice 26 en n secteurs d'excitation égaux, équi-répartis autour de l'axe 44, avec n supérieur ou égal à trois.

Sur chacun de ces secteurs on applique les tensions de la forme : $U_m = U \cos (\omega t + 2m \pi/n)$, m prenant toutes les valeurs de 0 à n-1.

Bien entendu la fonction précitée peut être approchée par toute tension périodique dont le fondamental est la période $\tau$, avec $\tau = 2\pi/\omega$.

A titre d'exemple non limitatif, pour n = 4, les 4 secteurs de la céramique piézo-motrice 26 peuvent être ainsi excités à l'aide des signaux définis dans le tableau 1. Sur la figure 2, on retrouve les quatre secteurs sous la référence 260, 261, 262, 263. Ils reçoivent respectivement des tensions d'excitation U0, U1, U2, U3.

TABLEAU 1

| Temps | 0 | $\tau/4$ | $2\tau/4$ | $3\tau/4$ | $4\tau/4=0$ |
|---|---|---|---|---|---|
| Secteur 1 | 1 | 0 | -1 | 0 | 1 |
| Secteur 2 | 0 | 1 | 0 | -1 | 0 |
| Secteur 3 | -1 | 0 | 1 | 0 | -1 |
| Secteur 4 | 0 | -1 | 0 | 1 | 0 |

Cette excitation crée une onde progressive d'une longueur d'onde unique sur le stator 20/26.

La céramique piézo-réceptrice 60 du rotor 40 reçoit un signal de période proche de la période $\tau$ et d'amplitude A, de phases $\varphi$ par rapport au signal d'excitation appliqué à la céramique piézo-motrice 26.

La période reçue sur la céramique piézo-réceptrice 60 peut être très légèrement différente de la période du signal d'excitation en raison de la rotation du rotor 40 par rapport au stator 20.

Le circuit 70 de commande représenté sur la figure 2 comprend essentiellement un module 72 de mesure de l'amplitude A du signal issu du capteur 60 et de la phase φ de ce signal par rapport audit signal lié au signal d'excitation, un comparateur 74 et un module de commande 76. La mesure de phase peut être obtenue grâce à un filtre numérique pour éliminer le bruit des harmoniques, et augmenter la précision. La fréquence d'excitation étant connue, il est intéressant d'utiliser un filtre en peigne.

Le comparateur 74 compare la grandeur de consigne G appliquée sur l'une de ses entrées au déphasage φ mesuré par le module 72 entre le signal issu du capteur 60 et le signal lié au signal d'excitation. Le comparateur 74 génère sur sa sortie une valeur E représentative de l'écart entre la valeur consigne G et ce déphasage φ.

Enfin, le module de commande 76 qui applique au module de mesure 72 un signal représentatif de l'origine de la phase, sur sa sortie 77, reçoit par ailleurs le signal d'amplitude A délivré par le module de mesure 72 et la valeur d'écart E issue du comparateur 74.

L'amplitude A du signal issu du capteur 60 est proportionnelle à la tension d'excitation U. Cependant, cette amplitude A est d'autant plus grande que l'on se rapproche de la fréquence de résonance mécanique. Or, il est souhaitable de se rapprocher de cette résonance pour obtenir un déplacement optimum du moteur.

Pour cela, comme suggéré précédemment, le module de commande 76 opère un balayage de la fréquence d'excitation appliqué à la céramique 26, jusqu'à obtention de l'amplitude A maximum en sortie du capteur 60 et du module de mesure 72.

Bien entendu ces moyens de recherche de la fréquence de résonance du transducteur pourront être remplacés par tous moyens équivalents.

Il peut s'agir par exemple de moyens exploitant la dérivée de la courbe de réponse en fréquence d'un capteur, placé sur le stator ou sur le rotor, pour déterminer le point de résonance.

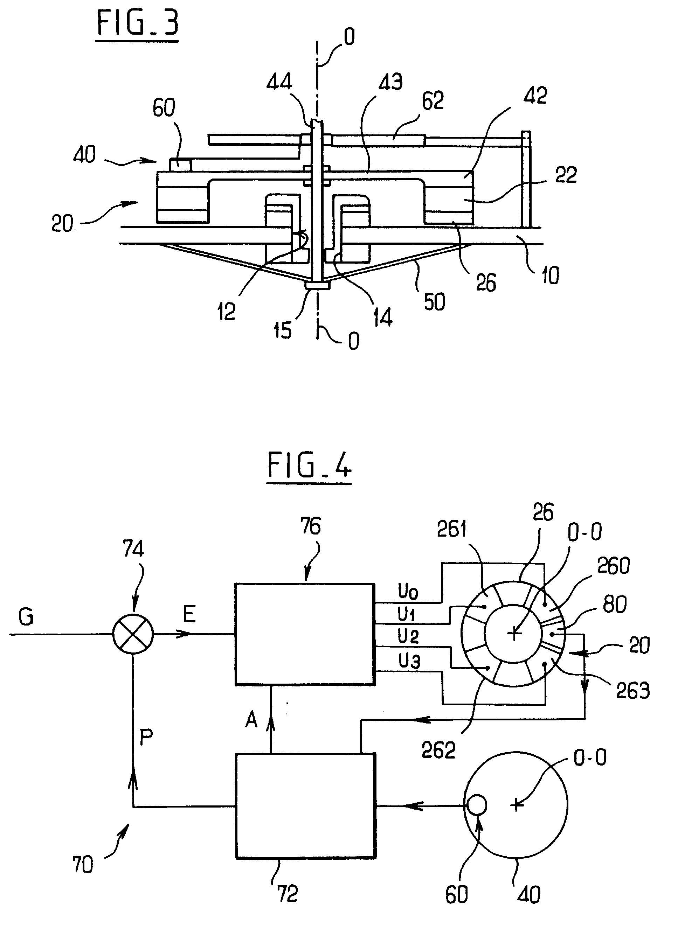

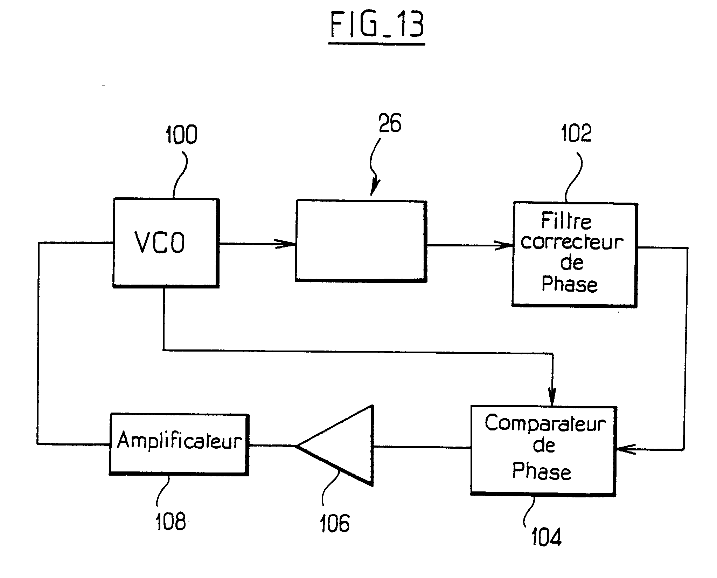

Selon une autre variante, les inventeurs ayant déterminé que le signal issu d'une cellule piézo-électrique détectrice placée sur le stator, telle que la cellule référencée 80 sur la figure 4, présente une chute brusque de sa phase aux alentours de la fréquence de résonance, typiquement d'une valeur équivalente à π/2, les moyens de commande peuvent prendre la structure représentée sur la figure 13.

On aperçoit sur cette figure 13 un circuit comprenant :

- un VCO 100 qui attaque les cellules piézo 26 du stator, par exemple avec des signaux en sinus et cosinus,
- un filtre 102 qui reçoit le signal généré par une cellule (80 par exemple) placée sur le stator, et applique une correction de phase, à ce signal,
- un comparateur de phase 104 qui compare le signal issu du filtre 102, et un signal de référence, par exemple le signal de sortie du VCO 100, et

- un intégrateur 106 qui assure la stabilité de la boucle et attaque le VCO 100 (le cas échéant par l'intermédiaire d'un amplificateur 108).

Un tel circuit permet de trouver la valeur exacte de la fréquence de résonance. On peut par la suite faire fonctionner le moteur à cette fréquence ou à une fréquence voisine en agissant sur le VCO 100.

En outre, la phase φ générée en sortie du module de mesure 72 est directement représentative de la position du rotor 40 par rapport au stator 20, sur un tour complet, sans ambiguité du fait que le stator ne génère qu'une longueur d'onde, pour l'onde progressive.

Pour bien comprendre l'invention, on notera qu'avec une onde progressive ultrasonore générée dans le stator 20, présentant trois longueurs d'onde, il y aurait ambiguité à un tiers ou deux tiers de tour près sur la position du rotor.

La phase φ permet donc de repérer avec précision la position du rotor 40.

Pour faire tourner le rotor 40 en sens contraire, il suffit de permuter la séquence temporelle d'excitation sur les n secteurs, par rapport au tableau 1, en utilisant par conséquent la séquence donnée dans le tableau 2.

TABLEAU 2

| Temps | 0 | $\tau/4$ | $2\tau/4$ | $3\tau/4$ | $4\tau/4$ |
|---|---|---|---|---|---|
| Secteur 1 | 1 | 0 | -1 | 0 | 1 |
| Secteur 2 | 0 | -1 | 0 | 1 | 0 |
| Secteur 3 | -1 | 0 | 1 | 0 | -1 |
| Secteur 4 | 0 | 1 | 0 | -1 | 0 |

Plus précisément, l'alimentation de la cellule piézo-électrique 26 peut faire l'objet de diverses modalités.

Selon un premier exemple, la cellule motrice 26 peut être alimentée selon les modalités suivantes :

i) si l'écart E du déphasage en sortie du comparateur 74 diminue, le module de commande 76 diminue l'amplitude des tensions d'alimentation U0, U1, U2, Un appliquées aux n secteurs,

ii) lorsque l'écart E est nul, on diminue très fortement l'amplitude U0, U1, U2, Un de ces tensions de manière à arrêter le rotor 40, tout en gardant un minimum de tension d'excitation permettant de mesurer la phase,

iii) lorsque l'écart E change de sens, on prend la deuxième séquence d'excitation (tableau 2) et on augmente l'amplitude pour que le rotor tourne,

iv) puis l'on reboucle le processus sur l'étape i.

Selon un second exemple, la céramique piézo-électrique 26 est alimentée selon les modalités suivantes :

   i) Quand l'écart de phase E généré par le comparateur 74 est nul, on supprime les tensions d'alimentation U0, U1, U2, Un. Il n'y a alors plus de mesure de phase.

   ii) On stocke dans une mémoire la valeur de phase $\varphi$ obtenue et

   iii) Cette valeur $\varphi$ mémorisée est comparée en permanence à la valeur de consigne G appliquée en entrée du système de commande.

   iv) Le déplacement du moteur est initié à nouveau par application des signaux d'excitation U0, U1, U2, Un si un écart est détecté entre la valeur de consigne d'entrée G, et la valeur de phase mémorisée $\varphi$.

Selon le mode de réalisation représenté sur la figure 1, la bague 22 du stator 20 est reliée au moyeu 14 par l'intermédiaire du flasque 24. L'invention n'est cependant pas limitée à ce mode de réalisation particulier.

Par exemple, on peut prévoir de coller les n secteurs de la rondelle piézo-électrique motrice 26 sur des pistes électriquement conductrices respectives du circuit imprimé 10, à l'aide d'une colle souple et conductrice, la rondelle motrice 26 étant collée de l'autre côté, par exemple par une colle dure, sur la bague 22 du stator 20 dépourvue du flasque 24, comme illustré sur la figure 3.

Selon les modes de réalisation décrits précédemment, le signal lié au signal d'excitation, utilisé comme référence de phase pour le module 72 était formé du signal de tension d'excitation lui-même appliqué sur les n secteurs de la rondelle motrice 26.

Selon d'autres variantes, on peut prendre comme origine de phase, la phase du courant d'excitation et non pas la tension, ou une phase obtenue par traitement du courant et de la tension d'excitation, ou encore ménager dans la rondelle motrice 26 du stator un capteur, référencé 80 sur la figure 4 générant en sortie un signal représentatif de la vibration réelle du stator. Le signal issu du capteur 80 peut être utilisé, d'une part pour la mesure de l'amplitude de vibration pilotant le balayage en fréquence comme indiqué précédemment pour approcher la résonance du système, et d'autre part comme référence de phase par rapport au capteur 60 du rotor.

Dans ce cas, les n secteurs piézo-électriques moteurs sont de préférence équi-répartis autour de l'axe du moteur et séparés par des intervalles équi-répartis correspondant chacun au capteur 80 précité comme illustré sur la figure 3.

L'utilisation d'un tel capteur 80 sur le stator permet notamment de s'affranchir de la pente de déphasage très sensible existant entre la phase du signal d'entrée et la vibration mécanique résultante du stator, au voisinage de la résonance.

Le schéma fonctionnel des moyens de commande résultant est illustré sur la figure 4.

On retrouve sur celle-ci les n secteurs 260, 261, 262, 263 (quatre en l'espèce) correspondant aux cellules piézo-électriques motrices de la rondelle 26 ainsi que les tensions de commande U0 à Un appliquées sur ces secteurs en sortie du module de commande 76.

On retrouve par ailleurs sur la figure 4 le module de mesure 72 qui reçoit une référence de phase en sortie du capteur 80 et le signal issu du capteur 60. Le module de mesure 72 applique un signal représentatif de l'amplitude A au module de commande 76 pour piloter le balayage en fréquence afin d'obtenir la résonance. En outre, le module de mesure 72 applique un signal de phase $\varphi$ sur le comparateur 74 qui reçoit en outre la valeur de consigne G d'entrée et génère à sa sortie l'écart E appliqué au module de commande 76.

On a indiqué précédemment que le rotor 40 était de préférence appliqué sur le stator 20 grâce à des moyens élastiques, sous un effort contrôlé.

Selon une autre variante, l'effort sous lequel le rotor 40 repose sur le stator 20 peut être contrôlé par des moyens magnétiques.

Cette disposition permet d'éviter tout effort parasite dû au ressort.

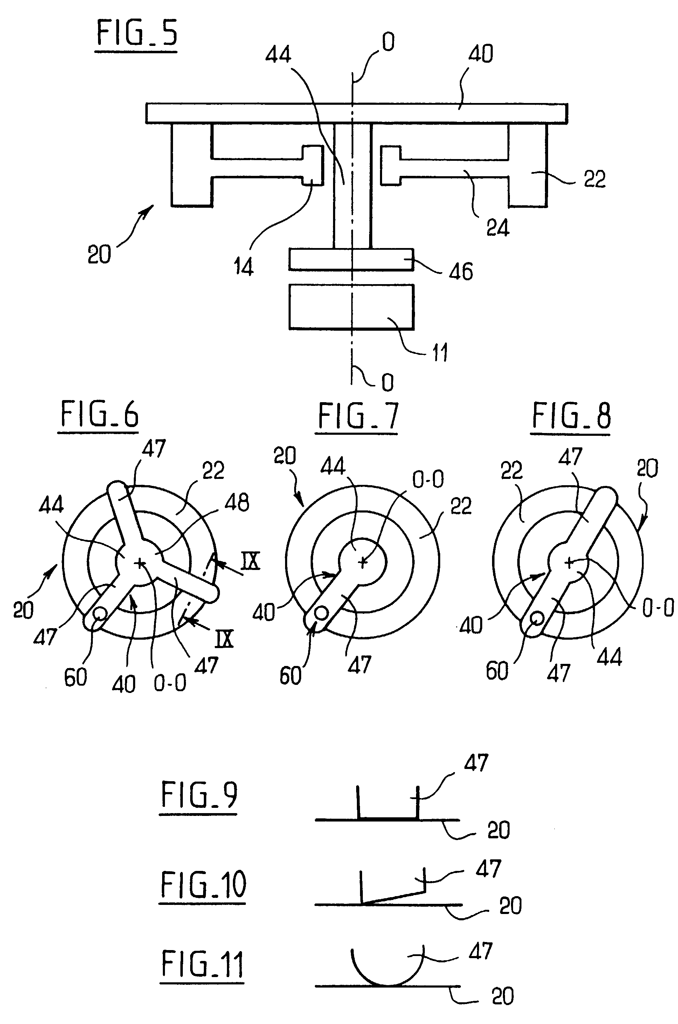

Comme on l'a schématisé sur la figure 5, on peut par exemple placer pour celà une palette magnétique 46 sur le rotor 40, en regard, par exemple axialement, d'un aimant 11 lié au stator 20 ou au bâti 10.

Le cas échéant, on peut réaliser l'intégralité du rotor 40 en matériau magnétique.

On peut par exemple former une partie au moins du stator 20 en un aimant ou une ferrite magnétique dure, une partie au moins du rotor placée en regard étant formée à base d'une ferrite magnétique douce, ou inversement. Selon encore une autre variante, une partie au moins du stator peut être formée en une ferrite magnétique dure à aimantation axiale, en regard d'une partie au moins du rotor similaire.

Bien entendu, le cas échéant, des rondelles de glissement peuvent être intercalées entre rotor et stator.

Comme on l'a schématisé sur la figure 6, le rotor 40 peut être formé non point d'une bague continue plane, mais d'une structure à appui ponctuel sur la bague 22 du stator.

Selon le mode de réalisation particulier non limitatif représenté sur la figure 6, on a ainsi illustré un rotor en forme d'étoile à trois branches 47 reliées en leur centre par un moyeu 48 lié à l'arbre 44 et dont les extrémités reposent sur la bague 22 du stator. Les branches 47 sont avantageusement équi-réparties autour de l'axe 44. L'une de ces branches 47 porte le capteur 60, par exemple à la verticale du stator 22. Lorsque plusieurs capteurs 60 sont prévus, ceux-ci sont disposés de préférence sur des branches différentes.

Bien entendu le nombre de branches 47 du rotor 40 peut faire l'objet de nombreuses variantes. Le rotor 40 peut ainsi comprendre une branche unique, ou encore deux branches diamétralement opposées, comme on l'a schématisé sur les figures 7 et 8.

Par rapport, à une couronne plane continue, l'utilisation de points d'appui ponctuels sur le stator permet de s'affranchir de perturbations pouvant résulter de contacts évolutifs (qui se déplacent) sous l'effet de déformation du rotor et/ou du stator.

En pratique, le point de contact des branches 47 sur le stator 22 peut faire l'objet de nombreuses variantes. Ce contact peut être établi par exemple par l'intermédiaire d'un doigt présentant une surface plane parallèle à la surface supérieure du stator 22 comme illustré sur la figure 9, par l'intermédiaire d'un doigt taillé en biseau incliné par rapport à la surface supérieure du stator 22 comme illustré sur la figure 10, ou encore par l'intermédiaire d'un doigt à extrémité arrondie comme illustré sur la figure 11.

L'exploitation de céramiques piézo-électriques polarisées peut permettre de simplifier l'architecture de connexion de celles-ci.

On sait en effet que deux céramiques piézo-électriques de polarisations opposées à la fabrication, subiront des déformations opposées sous un même signal d'excitation.

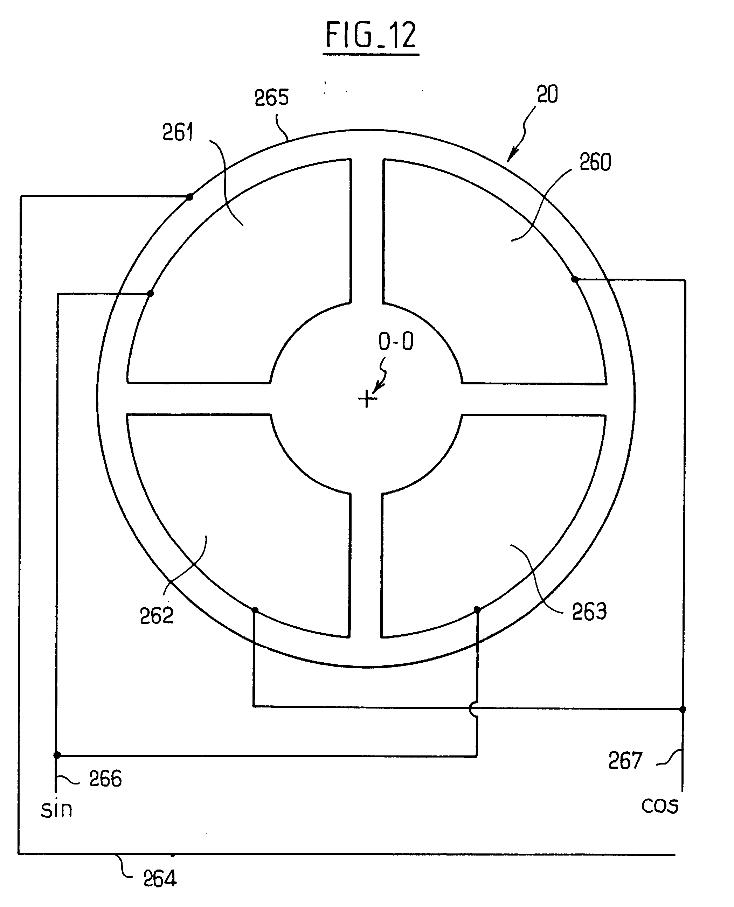

Par exemple, comme on l'a illustré sur la figure 12, dans le cas de quatre céramiques 260, 261, 262 et 263 équi-réparties autour de l'axe de rotation, on peut disposer les céramiques sous forme d'une première paire de céramiques 260, 263 adjacentes de polarisation positive, et une seconde paire de céramiques 261, 262 respectivement adjacentes de polarisation opposée négative.

Deux secteurs diamétralement opposés, l'un 263 appartenant à la première paire, l'autre 261 appartenant à la seconde paire, sont alimentés par un signal sinusoïdal entre une borne de masse 264 reliée à une électrode de masse 265 et une borne d'alimentation 266 commune aux deux céramiques 261, 263. Bien qu'alimentées par le même signal, ces deux céramiques 261, 263 ayant des polarisations opposées auront des réactions opposées.

De façon symétrique, les deux autres céramiques diamétralement opposées 260 et 262 peuvent êre alimentées par un signal en cosinus entre une borne d'alimentation commune 267 et la borne de masse 264. Là encore, les deux céramiques 260, 262, bien qu'alimentées par un même signal, auront des comportements opposés en raison de leur polarisation opposée.

Bien entendu la présente invention n'est pas limitée aux modes de réalisation particuliers qui viennent d'être décrits.

En particulier, l'invention n'est pas limitée à l'utilisation d'un moteur rotatif. Elle peut s'étendre à l'utilisation d'un moteur rectiligne.

Comme on l'a indiqué précédemment, l'invention s'applique à tout type de transducteur à onde progressive ultrasonore, en particulier aux transducteurs comprenant des cellules piézo-électriques ou des cellules magnéto-strictives.

La présente invention trouve notamment application dans la réalisation de moteurs, par exemple pour l'entraînement d'aiguilles d'indicateurs en regard de cadrans pour la visualisation d'informations sur tableaux de bord de véhicules automobiles. Cependant, elle n'est pas limitée à cette application particulière.

Comme on l'a indiqué précédemment, l'invention n'est pas limitée à la réalisation d'actionneur ou moteur, mais peut également trouver application dans la conception de capteurs. Dans ce cas, l'élément mobile est forcé à déplacement par un organe d'actionnement externe. L'onde mécanique progressive ne sert par conséquent pas à mouvoir l'élément mobile, mais seulement à détecter la position de cet élément mobile par rapport à l'élément fixe, par mesure du déphasage entre le signal issu du capteur 60 lié à l'élément mobile et le signal lié au signal d'excitation.

Ce signal d'excitation peut être un signal périodique carré, sinusoïdal ou de toute autre forme, proche de la fréquence de résonance.

Selon d'autres variantes, come indiqué précédemment, l'élément fixe 20 peut être adapté pour générer une onde mécanique progressive présentant plusieurs longueurs ondes, sous réserve que des moyens soient prévus pour limiter l'amplitude de déplacement mécanique relatif entre l'élément fixe 20 et l'élément mobile 40 à une amplitude inférieure à une longueur d'onde.

Lorsqu'une évolution de la fréquence d'excitation est prévue, il est intéressant d'utiliser un filtre à capacités commutées dans la détection des signaux afin de se placer toujours dans la même position par rapport à la pente du filtre, quelle que soit la fréquence d'excitation.

De préférence la longueur d'onde de l'onde mécanique progressive est égale à un sous-multiple de la longueur de l'élément fixe 20.

Par exemple pour un moteur rotatif, l'élément fixe 20 peut être adapté pour générer deux longueurs d'onde sur sa circonférence, si des moyens sont prévus pour limiter le déplacement du rotor 40 sur 180°; ou encore pour générer trois longueurs d'onde sur sa circonférence, si des moyens sont prévus pour limiter le déplacement du rotor 40 sur 120°.

Ces moyens conçus pour limiter le déplacement mécanique relatif entre l'élément fixe 20 et l'élément mobile 40 peuvent être formés de plusieurs variantes. Ils peuvent par exemple être formés de butées mécaniques ou encore être constitués par les moyens de commande eux-mêmes qui sont adaptés pour appliquer sur le moteur des signaux aptes à limiter le déplacement mécanique.

En outre la présente invention n'est pas limitée à l'utilisation d'une onde mécanique ultrasonore, mais peut s'étendre à l'utilisation d'ondes mécaniques situées dans une plage de fréquence différente.

Le capteur 60 placé sur le rotor peut être relié à des pistes métallisées électriquement conductrices prévues sur le circuit imprimé 10 par tous moyens équivalents à ceux précédemment décrits, par exemple par l'intermédiaire de contacts frottants.

Les diverses céramiques, telles que 260, 261, 262, 263 peuvent être réalisées sous forme de céramiques distinctes ou encore sous forme d'une céramique unique pourvue de plages d'alimentation distinctes, ou encore de toute combinaison intermédiaire entre ces deux variantes.

## Revendications

1. Transducteur à onde mécanique progressive, comprenant un élément fixe (20) et un élément (40) mobile par rapport à l'élément fixe (20), l'élément fixe (20) étant adapté pour générer une onde mécanique progressive, l'élément mobile (40) étant en contact avec l'élément fixe (20) et comportant au moins un capteur (60) localisé, sensible à l'onde progressive générée par l'élément fixe (20), et dans lequel il est prévu des moyens (72) de mesure du déphasage entre un signal lié au signal d'excitation appliqué à l'élément fixe (20) pour générer l'onde progressive et un signal détecté sur le capteur (60) caractérisé par le fait que l'élément fixe (20) est adapté pour générer une onde mécanique progressive présentant une longueur d'onde au moins égale à l'amplitude de déplacement mécanique relatif autorisé entre l'élément fixe (20) et l'élément mobile (40).

2. Transducteur selon la revendication 1, caractérisé par le fait que l'élément fixe (20) est adapté pour générer, sur sa longueur, une onde mécanique progressive présentant une longueur d'onde unique.

3. Transducteur selon la revendication 1, caractérisé par le fait que l'élément fixe (20) est adapté pour générer une onde mécanique progressive présentant plusieurs longueurs ondes, sous réserve que des moyens soient prévus pour limiter l'amplitude de déplacement mécanique relatif entre l'élément fixe (20) et l'élément mobile (40) à une amplitude au plus égale à une longueur d'onde.

4. Transducteur selon la revendication 3, caractérisé par le fait que la longueur d'onde de l'onde mécanique progressive est égale à un sous-multiple de la longueur de l'élément fixe (20).

5. Transducteur selon l'une des revendications 3 ou 4, caractérisé par le fait que les moyens limitant l'amplitude de déplacement mécanique relatif entre l'élément fixe (20) et l'élément mobile (40) sont formés de butées mécaniques.

6. Transducteur selon l'une des revendications 3 ou 4, caractérisé par le fait les moyens limitant l'amplitude de déplacement mécanique relatif entre l'élément fixe (20) et l'élément mobile (40) sont constitués par les moyens de commande eux-mêmes qui sont adaptés pour appliquer sur le moteur des signaux aptes à limiter le déplacement mécanique.

7. Transducteur selon l'une des revendications 1 à 6, caractérisé par le fait que ledit signal lié au signal d'excitation est formé de la tension du signal d'excitation appliqué à l'élément fixe (20) pour générer l'onde progressive.

8. Transducteur selon l'une des revendications 1 à 6, caractérisé par le fait que ledit signal lié au signal d'excitation est formé d'un signal issu d'un capteur (80) placé sur la partie fixe (20).

9. Transducteur selon l'une des revendications 1 à 6, caractérisé par le fait que ledit signal lié au signal d'excitation est formé par le courant appliqué à l'élément fixe pour générer l'onde progressive, ou une combinaison du courant et de la tension appliquée à cet élément fixe (20).

10. Transducteur selon l'une des revendications 1 à 9, caractérisé par le fait qu'il comprend des moyens de commande (76) adaptés pour appliquer à l'élément fixe (20) un signal dont la fréquence est proche de la fréquence de résonance mécanique du système.

11. Transducteur selon l'une des revendications 1 à 10, caractérisé par le fait qu'il comprend des moyens (72, 76) aptes à mesurer l'amplitude de vibrations mécaniques du système et des moyens aptes à opérer un balayage en fréquence du signal de commande appliqué à l'élément fixe (20) jusqu'à obtention par convergence d'une amplitude de vibrations mécaniques maximale.

12. Transducteur selon la revendication 11, caractérisé par le fait que l'amplitude des vibrations mécaniques est mesurée par mesure de l'amplitude d'un signal issu d'un capteur (60) placé sur l'élément mobile (40).

13. Transducteur selon la revendication 11, caractérisé par le fait que l'amplitude des vibrations mécaniques de l'élément mobile est mesurée par mesure de l'amplitude d'un signal issu d'un capteur (80) prévu sur l'élément fixe.

14. Transducteur selon la revendication 10, caractérisé par le fait que les moyens de commande (76) exploitent la dérivée de la courbe de réponse en fréquence d'un capteur placé sur l'élément fixe (20) ou l'élement mobile (40), pour déterminer le point de résonance.

15. Transducteur selon la revendication 10, caractérisé par le fait que les moyens de commande comprennent un circuit comportant :

- un oscillateur commandé en tension, Voltage Controlled Oscillator ou VCO, (100) qui attaque au moins une cellule piézo (26) placée sur l'élément fixe (20),
- un filtre (102) qui reçoit le signal généré par une cellule (80) placée sur l'élément fixe (20), et applique une correction de phase, à ce signal,
- un comparateur de phase (104) qui compare le signal issu du filtre (102), et un signal de référence, par exemple le signal de sortie du VCO (100), et
- un intégrateur (106) qui assure la stabilité de la boucle et attaque le VCO (100), le cas échéant par l'intermédiaire d'un amplificateur (108).

16. Transducteur selon l'une des revendications 1 à 15, caractérisé par le fait que l'élément fixe (20) comprend n secteurs (260, 263) comprenant chacun une cellule motrice, avec n supérieur ou égal à trois, recevant chacun une tension de la forme :

$$U_m = U \cos(\omega t + 2m\pi/n).$$

17. Transducteur selon l'une des revendications 1 à 16, caractérisé par le fait qu'il comprend des moyens aptes à permuter la séquence temporelle du signal d'excitation appliquée à l'élément fixe, pour inverser le sens de déplacement de celui-ci.

18. Transducteur selon l'une des revendications 1 à 17, caractérisé par le fait qu'il comprend des moyens de commande composés d'un module (72) apte à mesurer l'amplitude d'un signal issu d'un capteur de vibrations (60, 80) ainsi que le déphasage du signal issu d'un capteur (60) par rapport au signal lié au signal d'excitation, un comparateur (74) apte à comparer le déphasage ainsi mesuré (P) à une valeur de consigne appliquée en entrée (G), et un module de commande (76) adapté, d'une part pour opérer un balayage en fréquence du signal d'excitation jusqu'à obtention par convergence d'une amplitude maximale du signal issu du capteur de vibrations, et d'autre part à moduler l'amplitude du signal d'excitation appliqué à l'élément fixe (20) en fonction de l'écart de phase détectée en sortie du comparateur (74).

19. Transducteur selon l'une des revendications 1 à 18, caractérisé par le fait que l'élément mobile (40) est en contact ponctuel sur l'élément fixe (20).

20. Transducteur selon la revendication 19, caractérisé par le fait que l'élément mobile (40) a la forme générale d'une étoile comprenant un n'ombre de branches (47) supérieur ou égal à 1.

21. Transducteur selon la revendication 20, caractérisé par le fait que un capteur (60) est prévu sur au moins une extrémité de l'une des branches (47) de l'étoile.

22. Transducteur selon l'une des revendications 1 à 21, caractérisé par le fait qu'il comprend des moyens magnétiques (11, 46) assurant une sollicitation de l'élément mobile (40) vers l'élément fixe (20).

23. Transducteur selon l'une des revendications 1 à 22, caractérisé par le fait qu'il comprend des cellules piézo-électriques (260, 261, 262, 263) présentant des polarités opposées.

24. Transducteur selon l'une des revendications 1 à 23, caractérisé par le fait qu'il comprend une première paire de cellules adjacentes (260, 263) de même polarité, une seconde paire respectivement adjacente de cellules (261, 262) de polarité identique entre elles et opposée à la première paire, deux cellules diamétralement opposées (261, 263) appartenant respectivement- à chaque paire précitée et étant alimentées entre une borne de masse (264) et une borne d'alimentation commune (266) tandis que les deux autres cellules diamétralement opposées sont alimentées entre la borne de masse (264) et une seconde borne d'alimentation commune (267).

25. Transducteur selon la revendication 24, caractérisé par le fait que les deux cellules diamétralement opposées (261, 263) premières citées sont alimentées par un signal en quadrature de phase par rapport aux deux autres cellules diamétralement opposées (260, 262).

26. Transducteur selon l'une des revendications 1 à 25, caractérisé par le fait qu'il comprend des moyens de commande aptes à appliquer la séquence suivante :

i) diminution de l'amplitude du signal d'excitation appliquée à l'élément fixe (20) lorsque l'écart (E) de phase entre ledit signal lié au signal d'excitation et le signal détecté sur le capteur (60), diminue,

ii) très forte diminution de l'amplitude de ce signal d'excitation lorsque l'écart (E) de phase devient nul, tout en gardant un minimum de signal d'excitation pour permettre de mesurer la phase,

iii) permutation de la séquence du signal d'excitation lorsque l'écart de phase détecté change de sens et augmentation simultanée de l'amplitude du signal d'excitation,

iv) réitération du processus à partir de l'étape i).

27. Transducteur selon l'une des revendications 1 à 25, caractérisé par le fait qu'il comprend des moyens de commande aptes à interrompre le signal d'excitation appliqué à l'élément fixe (20) lorsque l'écart (E) de phase entre ledit signal lié au signal d'excitation et le signal détecté sur le capteur (60), devient nul, des moyens de mémorisation aptes à mémoriser la valeur de la phase ($\varphi$) détectée lors de l'arrêt du signal d'excitation, des moyens de comparaison aptes à comparer la valeur de phase ($\varphi$) mémorisée à la valeur de consigne d'entrée (G) pour ré-initier le signal d'excitation appliqué à l'élément fixe (20) lorsque la phase ($\varphi$) mémorisée diffère de la phase de consigne (G) appliquée en entrée.

28. Transducteur selon l'une des revendications 1 à 27, caractérisé par le fait qu'il comprend un bâti (10) qui porte un stator (20) comprenant une bague (22) reliée à un moyeu par l'intermédiaire d'un flasque (24), une rondelle (26) d'élément moteur intercalée entre le bâti et cette rondelle et un élément mobile formé d'un rotor (42) comportant une rondelle (42) qui repose contre la bague (22) de l'élément fixe et qui est reliée par l'intermédiaire d'un flasque (43) à un arbre (44) guidé à rotation.

29. Transducteur selon l'une des revendications 1 à 28, caractérisé par le fait qu'il comprend un élément fixe constitué d'une bague (22) superposée à une rondelle d'éléments moteurs (26) lesquels sont collés d'une part sur un bâti (10) par l'intermédiaire d'une colle, avantageusement électriquement conductrice et collés, d'autre part sur la bague de l'élément fixe (22).

30. Transducteur selon l'une des revendications 1 à 29, caractérisé par le fait que le capteur (60) est relié à au moins un spiral (62) électriquement conducteur.

31. Transducteur selon l'une des revendications 1 à 30, caractérisé par le fait qu'il constitue un actionneur ou moteur.

32. Transducteur selon l'une des revendications 1 à 31, caractérisé par le fait qu'il constitue un capteur.

33. Transducteur selon l'une des revendications 1 à 32, caractérisé par le fait que l'élément fixe (20) comprend des cellules piézo-électriques.

34. Transducteur selon l'une des revendications 1 à 32, caractérisé par le fait que l'élément fixe (20) comprend des cellules magnétostrictives excitées par des moyens générateurs de champ magnétique.

35. Transducteur selon l'une des revendications 1 à 34, caractérisé par le fait que l'élément mobile (40) est guidé à rotation ou à translation rectiligne.

36. Transducteur selon la revendication 24, caractérisé par le fait que des cellules (260, 261, 262, 263) de polarités opposées, diamétralement opposées, sont alimentées par un même signal d'excitation.

**Patentansprüche**

1. Wandler für eine fortschreitende mechanische Welle mit einem festen Element (20) und einem Element (40), das bezüglich des festen Elementes (20) beweglich ist, wobei das feste Element (20) so ausgebildet ist, daß es eine fortschreitende mechanische Welle erzeugt, das bewegliche Element (40) in einem Kontakt mit dem festen Element (20) steht und wenigstens einen örtlich festliegenden Meßfühler (60) umfaßt, der für die fortschreitende Welle empfindlich ist, die durch das feste Element (20) erzeugt wird, und der mit Einrichtungen (72) zum Messen des Phasenunterschiedes zwischen einem Signal, das mit einem Anregungssignal gekoppelt ist, das am festen Element (20) zum Erzeugen der fortschreitenden Welle liegt, und einem Signal, das am Meßfühler (60) erfaßt wird, versehen ist, dadurch gekennzeichnet, daß das feste Element (20) so ausgebildet ist, daß es eine fortschreitende mechanische Welle erzeugt, die eine Wellenlänge hat, die wenigstens gleich der Amplitude der relativen mechanischen Versetzung ist, die zwischen dem festen Element (20) und dem beweglichen Element (40) zulässig ist.

2. Wandler nach Anspruch 1, dadurch gekennzeichnet, daß das feste Element (20) so ausgebildet ist, daß es über seine Länge eine fortschreitende mechanische Welle erzeugt, die eine bestimmte Wellenlänge hat.

3. Wandler nach Anspruch 1, dadurch gekennzeichnet, daß das feste Element (20) so ausgebildet ist, daß es eine fortschreitende mechanische Welle erzeugt, die mehrere Wellenlängen hat, und zwar unter dem Vorbehalt, daß Einrichtungen vorgesehen sind, die die Amplitude der relativen mechanischen Versetzung zwischen dem festen Element (20) und dem beweglichen Element (40) auf eine Amplitude begrenzen, die höchstens gleich einer Wellenlänge ist.

4. Wandler nach Anspruch 3, dadurch gekennzeichnet, daß die Wellenlänge der fortschreitenden mechanischen Welle gleich einem Bruchteil der Länge des festen Elementes (20) ist.

5. Wandler nach Anspruch 3 oder 4, dadurch gekennzeichnet, daß die Einrichtungen, die die Amplitude der relativen mechanischen Versetzung zwischen dem festen Element (20) und dem beweglichen Element (40) begrenzen, in Form von mechanischen Anschlägen ausgebildet sind.

6. Wandler nach Anspruch 3 oder 4, dadurch gekennzeichnet, daß die Einrichtungen, die die Amplitude der relativen mechanischen Versetzung zwischen dem festen Element (20 und dem beweglichen Element (40) begrenzen, aus Selbststeuereinrichtungen bestehen, die so ausgebildet sind, daß sie Signale an den Wandler legen, die geeignet sind, die mechanische Versetzung zu begrenzen.

7. Wandler nach einem der Ansprüche 1 bis 6, dadurch gekennzeichnet, daß das Signal, das mit dem Anregungssignal gekoppelt ist, aus der Anregungssignalspannung gebildet ist, die am festen Element (20) zum Erzeugen der fortschreitenden Welle liegt.

8. Wandler nach einem der Ansprüche 1 bis 6, dadurch gekennzeichnet, daß das Signal, das mit dem Anregungssignal gekoppelt ist, aus einem Signal gebildet ist, das von einem Signalgeber (80) ausgegeben wird, der am festen Teil (20) angeordnet ist.

9. Wandler nach einem der Ansprüche 1 bis 6, dadurch gekennzeichnet, daß das Signal, das mit dem Anregungssignal gekoppelt ist, aus dem Strom, mit dem das feste Element zur Erzeugung der fortschreitenden Welle versorgt wird, oder aus einer Kombination des Stromes und der Spannung gebildet ist, die an diesem festen Element (20) liegen.

10. Wandler nach einem der Ansprüche 1 bis 9, dadurch gekennzeichnet, daß er Steuereinrichtungen (76) umfaßt, die so ausgebildet sind, daß sie ein Signal an das feste Element (20) legen, dessen Frequenz nahe an der mechanischen Resonanzfrequenz des Systems liegt.

11. Wandler nach einem der Ansprüche 1 bis 10, dadurch gekennzeichnet, daß er Einrichtungen (72, 76), die so ausgebildet sind, daß sie die Amplitude mechanischer Schwingungen des Systems messen, und Einrichtungen aufweist, die so ausgebildet sind, daß sie einen Frequenzhub des Steuersignals, das am festen Element (20) liegt, ausführen, bis über eine Annäherung eine maximale Amplitude der mechanischen Schwingungen erreicht ist.

12. Wandler nach Anspruch 11, dadurch gekennzeichnet, daß die Amplitude der mechanischen Schwingungen über den Wert der Amplitude eines Signals gemessen wird, das von dem Meßfühler (60) ausgegeben wird, der am beweglichen Element (40) angeordnet ist.

13. Wandler nach Anspruch 11, dadurch gekennzeichnet, daß die Amplitude der mechanischen Schwingungen des beweglichen Elementes über den Wert der Amplitude eines Signals gemessen wird, das von einem Meßfühler (80) ausgegeben wird, der am festen Element vorgesehen ist.

14. Wandler nach Anspruch 10, dadurch gekennzeichnet, daß die Steuereinrichtungen (76) das Differential des Frequenzgangs eines Meßfühlers ausnutzen, der am festen Element (20) oder am beweglichen Element (40) angeordnet ist, um die Stelle der Resonanz zu bestimmen.

15. Wandler nach Anspruch 10, dadurch gekennzeichnet, daß die Steuereinrichtungen eine Schaltung umfassen, die

- einen spannungsgesteuerten Oszillator, Voltage Controlled Oszillator oder VCO(100), der wenigstens eine Piezozelle (26) betreibt, die am festen Element (20) angebracht ist,
- ein Filter (102), das das Signal empfängt, daß durch eine Zelle (80) erzeugt wird, die am festen Element (20) angeordnet ist, und an dieses Signal eine Phasenkorrektur legt,
- einen Phasenkomparator (104), der das Signal, das vom Filter (102) ausgegeben wird, und ein Bezugssignal, beispielsweise das Ausgangssignal des VCO(100), vergleicht, und
- einen Integrator (106) aufweist, der die Stabilität der Schleife sicherstellt und den VCO(100) betreibt und zwar ggf. über einen dazwischen angeordneten Verstärker (108).

16. Wandler nach einem der Ansprüche 1 bis 15, dadurch gekennzeichnet, daß das feste Element (20) n Sektoren (260, 263) umfaßt, von denen jeder eine Treiberzelle aufweist, wobei n größer als oder gleich drei ist und wobei jeder Sektor eine Spannung der folgenden Form empfängt:

$$U_m = U \cos (\omega\tau + 2m\,\pi/n).$$

17. Wandler nach einem der Ansprüche 1 bis 16, dadurch gekennzeichnet, daß er Einrichtungen aufweist, die so ausgebildet sind, daß sie die zeitliche Abfolge des Anregungssignals umstellt, um die Richtung der Versetzung dieses Elementes umzukehren.

18. Wandler nach einem der Ansprüche 1 bis 17, dadurch gekennzeichnet, daß er Steuereinrichtungen umfaßt, die aus einem Modul (72), der die Amplitude eines Signals, das von einem Schwingungsmeßfühler (60, 80) ausgegeben wird, sowie die Phasenverschiebung des Signals, das von einem Meßfühler (60) ausgegeben wird, bezüglich des Signals messen kann, das mit dem Anregungssignal gekoppelt ist, einem Komparator (74), der die in dieser Weise gemessene Phasenverschiebung (P) mit einem Einstellwert (G) vergleichen kann, der am Eingang liegt, und einem Steuermodul (76) besteht, der einerseits einen Frequenzhub des Anregungssignals ausführen kann, bis durch Annäherung eine maximale Amplitude des Signals erreicht ist, das vom Schwingungsmeßfühler ausgegeben wird, und andererseits die Amplitude des Anregungssignals, das am festen Element (20) liegt, in Abhängigkeit von dem Phasenhub modulieren kann, der am Ausgang des Komparators (74) erfaßt wird.

19. Wandler nach einem der Ansprüche 1 bis 18, dadurch gekennzeichnet, daß das bewegliche Element (40) in einem Punktkontakt mit dem festen Element (20) steht.

20. Wandler nach Anspruch 19, dadurch gekennzeichnet, daß das bewegliche Element (40) im wesentlichen die Form eines Sternes mit einer Anzahl von Zacken (47) hat, die größer als oder gleich 1 ist.

21. Wandler nach Anspruch 20, dadurch gekennzeichnet, daß ein Meßfühler (60) wenigstens an einem Ende eines der Zacken (47) des Sternes vorgesehen ist.

22. Wandler nach einem der Ansprüche 1 bis 21, dadurch gekennzeichnet, daß er magnetische Einrichtungen (11, 46) aufweist, die eine Beaufschlagung des beweglichen Elementes (40) gegen das feste Element (20) sicherstellen.

23. Wandler nach einem der Ansprüche 1 bis 22, dadurch gekennzeichnet, daß er piezoelektrische Zellen (260, 261, 262, 263) aufweist, die entgegengesetzt gepolt sind.

24. Wandler nach einem der Ansprüche 1 bis 23, dadurch gekennzeichnet, daß er ein erstes Paar von benachbarten Zellen (260, 263) der gleichen Polung und ein zweites Paar von jeweils benachbarten Zellen (261, 262) mit zueinander identischer und zum ersten Paar entgegengesetzter Polung umfaßt, wobei zwei diametral gegenüberliegende Zellen (261, 263) jeweils in jedem Paar auftreten und zwischen einem Masseanschluß (264) und einem gemeinsamen Versorgungsanschluß (266) versorgt werden, während die beiden anderen diametral einander gegenüberliegenden Zellen zwischen dem Masseanschluß (264) und einem zweiten gemeinsamen Versorgungsanschluß (267) versorgt werden.

25. Wandler nach Anspruch 24, dadurch gekennzeichnet, daß die zuerst genannten beiden diametral aneinander gegenüberliegenden Zellen (261, 263) mit einem Signal versorgt werden, das um 90° bezüglich der beiden anderen diametral gegenüberliegenden Zellen (260, 262) phasenverschoben ist.

26. Wandler nach einem der Ansprüche 1 bis 25, dadurch gekennzeichnet, daß er Steuereinrichtungen aufweist, die die folgende Arbeitsschrittabfolge ausführen können:

i) Minderung der Amplitude des Anregungssignals, das am festen Element (20) liegt, wenn der Phasenhub (E) zwischen dem Signal, das mit dem Anregungssignal gekoppelt ist, und dem Signal, das vom Meßfühler (60) erfaßt wird, abnimmt,
ii) noch stärkere Minderung der Amplitude des Anregungssignals, wenn der Phasenhub (E) gleich Null wird, wobei allerdings ein Minimum an Anregungssignal erhalten bleibt, um eine Phasenmessung zu ermöglichen,
iii) Umstellung der Abfolge des Anregungssignals, wenn der erfasste Phasenhub seinen Sinn ändert, und gleichzeitige Erhöhung der Amplitude des Anregungssignals und
iv) Wiederholung der Arbeitsvorgänge ausgehend von dem Schritt i).

27. Wandler nach einem der Ansprüche 1 bis 25, dadurch gekennzeichnet, daß er Steuereinrichtungen, die das Anregungssignal, das am festen Element (20) liegt, unterbrechen können, wenn der Phasenhub (E) zwischen dem Signal, das mit dem Anregungssignal gekoppelt ist, und dem Signal, das am Meßfühler (60) erfaßt wird, gleich Null wird, Speichereinrichtungen, die den erfaßten Phasewert (φ) ab der Ankunft des Anregungssignals speichern können, und Vergleichseinrichtungen umfaßt, die den gespeicherten Phasenwert (φ) mit einem Eingangseinstellwert (G) vergleichen können, um das am festen Element (20) liegende Signal wieder einzuführen, wenn der gespeicherte Phasewert (φ) von der am Eingang liegenden Einstellphase (G) verschieden ist.

28. Wandler nach einem der Ansprüche 1 bis 27, dadurch gekennzeichnet, daß er ein Unterteil (10) umfaßt, das einen Stator (20) trägt, der eine Scheibe (22), die über einen Flansch (24) mit einer Nabe verbunden ist, eine Unterlegscheibe (26) eines Stators, der zwischen dem Unterteil und der Unterlegscheibe angeordnet ist, und ein bewegliches Element umfaßt, das einen Rotor (42) bildet, der eine Unterlegscheibe (42) trägt, die an der Scheibe (22) des festen Elementes anliegt und über einen Flansch (43) mit einer drehbar geführten Welle (44) verbunden ist.

29. Wandler nach einem der Ansprüche 1 bis 28, dadurch gekennzeichnet, daß er ein festes Element umfaßt, das aus einer Scheibe (22) besteht, über der eine Unterlegscheibe von Statoren (26) liegt, welche einerseits an das Unterteil (10) über ein Klebemittel, vorzugsweise ein elektrisch leitendes Klebemittel und andererseits an die Scheibe des festen Elementes (22) geklebt ist.

30. Wandler nach einem der Ansprüche 1 bis 29, dadurch gekennzeichnet, daß der Meßfühler (60) mit wenigstens einem spiralförmigen elektrischen Leiter (62) verbunden ist.

31. Wandler nach einem der Ansprüche 1 bis 30, dadurch gekennzeichnet, daß er ein Stellglied oder einen Motor bildet.

32. Wandler nach einem der Ansprüche 1 bis 31, dadurch gekennzeichnet, daß er einen Meßfühler bildet.

33. Wandler nach einem der Ansprüche 1 bis 32, dadurch gekennzeichnet, daß das feste Element (20) piezoelektrische Zellen umfaßt.

34. Wandler nach einem der Ansprüche 1 bis 32, dadurch gekennzeichnet, daß das feste Element (20) magnetostriktive Zellen umfaßt, die über Magnetfeldgeneratoreinrichtungen angeregt werden.

35. Wandler nach einem der Ansprüche 1 bis 34, dadurch gekennzeichnet, daß das bewegliche Element (40) in einer Drehbewegung oder einer geradlinigen Translationsbewegung geführt ist.

36. Wandler nach Anspruch 24, dadurch gekennzeichnet, daß die Zellen (260, 261, 262, 263) mit entgegengesetzter Polung, die diametral aneinander gegenüber liegen, mit dem selben Anregungssignal versorgt sind.

**Claims**

1. A mechanical travelling wave transducer comprising a fixed element (20) and a moving element (40) that is movable relative to the fixed element (20), the fixed element (20) being adapted to generate a mechanical travelling wave, the moving element (40) being in contact with the fixed element (20) and including at least one localized sensor (60) responsive to the travelling wave generated by the fixed element (20). and in which means (72) are provided for measuring the phase difference between a signal associated with an excitation signal applied to the fixed element (20) for generating the travelling wave and a signal detected by the sensor (60), the transducer being characterized by the fact that the fixed element (20) is adapted to generate a mechanical travelling wave having a wavelength that is not less than the amplitude of relative mechanical displacement that is allowed between the fixed element (20) and the moving element (40).

2. A transducer according to claim 1, characterized by the fact that the fixed element (20) is adapted to generate over its length a mechanical travelling wave having a single wavelength.

3. A transducer according to claim 1, characterized by the fact that the fixed element (20) is adapted to generate a mechanical travelling wave having a plurality of wavelengths, providing that means are provided to limit the amplitude of relative mechanical displacement between the fixed element (20) and the moving element (40) to an amplitude that is no greater than one wavelength.

4. A transducer according to claim 3, characterized by the fact that the wavelength of the mechanical travelling wave is equal to a submultiple of the length of the fixed element (20).

5. A transducer according to claim 3 or 4, characterized by the fact that the means limiting the relative mechanical displacement amplitude between the fixed element (20) and the moving element (40) are formed by mechanical abutments.

6. A transducer according to claim 3 or 4, characterized by the fact that the means limiting the amplitude of the relative mechanical displacement between the fixed element (20) and the moving element (40) are constituted by control means which are themselves adapted to apply to the drive signals suitable for limiting mechanical displacement.

7. A transducer according to any one of claims 1 to 6, characterized by the fact that said signal linked to the excitation signal is formed by the voltage of the excitation signal applied to the fixed element (20) to generate the travelling wave.

8. A transducer according to any one of claims 1 to 6, characterized by the fact that said signal linked to the excitation signal is formed by a signal from a sensor (80) placed on the fixed portion (20).

9. A transducer according to any one of claims 1 to 6, characterized by the fact that said signal linked to the excitation signal is formed by the current applied to the fixed element to generate the travelling wave, or a combination of the current and the voltage applied to said fixed element (20).

10. A transducer according to any one of claims 1 to 9, characterized by the fact that it includes control means (76) adapted to apply a signal to the fixed element (20), which signal has a frequency close to the mechanical resonance frequency of the system.

11. A transducer according to any one of claims 1 to 10, characterized by the fact that it includes means (72, 76) suitable for measuring the amplitude of the mechanical vibration of the system. and means suitable for causing the frequency of the control signal applied to the fixed element (20) to scan until a maximum amplitude of mechanical vibration is obtained by convergence.

12. A transducer according to claim 11, characterized by the fact that the amplitude of mechanical vibration is measured by measuring the amplitude of a signal from a sensor (60) placed on the moving element (40).

13. A transducer according to claim 11, characterized by the fact that the amplitude of the mechanical vibration of the moving element is measured by measuring the amplitude of a signal from a sensor (80) provided on the fixed element.

14. A transducer according to claim 10, characterized by the fact that the control means (76) make use of the derivative of the frequency response curve of a sensor placed on the fixed element (20) or the moving element (40) to determine the point of resonance.

15. A transducer according to claim 10, characterized by the fact that the control means comprise a circuit including:

- a voltage controlled oscillator (VCO) (100) feeding at least one piezoelectric cell (26) placed on the fixed element (20);
- a filter (102) which receives the signal generated by the cell (80) placed on the fixed element (20), and which applies a phase correction to said signal;
- a phase comparator (104) which compares the signal from the filter (102) with a reference signal. e.g. the output signal from the VCO (100); and
- an integrator (106) which ensures that the loop is stable and which drives the VCO (100), where appropriate via an amplifier (108).

16. A transducer according to any one of claims 1 to 15, characterized by the fact that the fixed element (20) comprises $\underline{n}$ sectors (260, 263) each comprising a driving cell, where $\underline{n}$ is greater than or equal to 3, each receiving a voltage of the form:

$$U_m = U.\cos(\omega t + 2m\pi/n).$$

17. A transducer according to any one of claims 1 to 16, characterized by the fact that it includes means suitable for permutating the time sequence of the excitation signal applied to the fixed element to reverse the displacement direction thereof.

18. A transducer according to any one of claims 1 to 17, characterized by the fact that it includes control means made up of a module (72) suitable for measuring the amplitude of a signal from a vibration sensor (60, 80) and for measuring the phase difference between the signal from a sensor (60) and the signal linked to the excitation signal. a comparator (74) suitable for comparing the phase difference (P) as measured in this way with a reference value applied at an input (G), and a control module (76) adapted to firstly to cause the frequency of the excitation signal to scan until a maximum amplitude of the signal from the vibration sensor is obtained by convergence. and secondly to modulate the amplitude of the excitation signal applied to the fixed element (20) as a function of the phase difference detected at the output from the comparator (74).

19. A transducer according to any one of claims 1 to 18, characterized by the fact that the moving element (40) is in point contact with the fixed element (20).

20. A transducer according to claim 19, characterized by the fact that the moving element (40) is generally in the form of a star having a number of branches (47) greater than or equal to 1.

21. A transducer according to claim 20, characterized by the fact that the sensor (60) is provided to at least one end of one of the branches (47) of the star.

22. A transducer according to any one of claims 1 to 21, characterized by the fact that it includes magnetic means (11, 46) urging the moving element (40) towards the fixed element (20).

23. A transducer according to any one of claims 1 to 22, characterized by the fact that it includes piezoelectric cells (260, 261, 262, 263) presenting opposite polarities.

24. A transducer according to any one of claims 1 to 23, characterized by the fact that it includes a first adjacent pair of same-polarity cells (260, 263), a second pair of adjacent cells (261, 262) of mutually identical polarity opposite to that of the first pair. two diametrically opposite cells (261, 263) belonging respectively to each of the above-mentioned pairs being fed between a ground terminal (264) and a common feed terminal (266), while the other two diametrically opposite cells are fed between the ground terminal (264) and a second common feed terminal (267).

25. A transducer according to claim 24, characterized by the fact that the two first-mentioned diametrically opposite cells (261, 263) are fed by a signal in phase quadrature relative to the other two diametrically opposite cells (260, 262).

26. A transducer according to any one of claims 1 to 25, characterized by the fact that it includes control means suitable for applying the following sequence:

> i) the amplitude of the excitation signal applied to the fixed element (20) is decreased when the phase difference (E) between said signal linked to the excitation signal and the signal detected by the sensor (60) decreases;
> ii) the amplitude of said excitation signal is decreased very greatly when the phase difference (E) becomes zero, while nevertheless maintaining a minimum amount of excitation signal in order to be able to measure phase;
> iii) the sequence of the excitation signal is permutated when the detected phase difference changes sign, and simultaneously the amplitude of the excitation signal is increased; and
> iv) the process is reiterated from step i).

27. A transducer according to any one of claims 1 to 25, characterized by the fact that it includes control means suitable for interrupting the excitation signal applied to the fixed element (20) when the phase difference (E) between said signal linked to the excitation signal and the signal detected by the sensor (60) becomes zero. memory means suitable for storing the phase value ($\varphi$) detected when the excitation signal is stopped. comparative means suitable for comparing the stored phase value ($\varphi$) with the input reference value (G) to reinitiate the excitation signal applied to the fixed element (20) when the stored phase ($\varphi$) differs from the input reference phase (G).

28. A transducer according to any one of claims 1 to 27, characterized by the fact that it comprises a structure (10) carrying a stator (20) comprising a ring (22) connected to a hub via a cheekplate (24), a drive element washer (26) interposed between the structure and said washer, and a moving element formed by a rotor (42) including a washer (42) resting against the ring (22) of the fixed element and connected via a cheekplate (43) to a shaft (44) that is guided in rotation.

29. A transducer according to any one of claims 1 to 28, characterized by the fact that it includes a fixed element constituted by a ring (22) superposed on a washer of drive elements (26) which are stuck firstly to a structure (10) by means of an adhesive, advantageously an electrically conductive adhesive, and stuck secondly to the ring of the fixed element (22).

30. A transducer according to any one of claims 1 to 29, characterized by the fact that the sensor (60) is connected to at least one electrically conductive spiral (62).

31. A transducer according to any one of claims 1 to 30, characterized by the fact that it constitutes an actuator or a motor.

32. A transducer according to any one of claims 1 to 31, characterized by the fact that it constitutes a sensor.

33. A transducer according to any one of claims 1 to 32, characterized by the fact that the fixed element (20) comprises piezoelectric cells.

34. A transducer according to any one of claims 1 to 32, characterized by the fact that the fixed element (20) comprises magnetostrictive cells excited by magnetic field generator means.

35. A transducer according to any one of claims 1 to 34, characterized by the fact that the moving element (40) is guided in rotation or in rectilinear translation.

36. A transducer according to claim 24, characterized by the fact that the diametrically opposite cells (260, 261, 262, 263) of opposite polarity are powered by a common excitation signal.

FIG_1

FIG_2

FIG.3

FIG.4

FIG_5

FIG_6  FIG_7  FIG_8

FIG_9

FIG_10

FIG_11

# FIG.12

# FIG_13